# EUROPEAN PATENT APPLICATION

(11) **EP 4 138 481 A1**
(43) Date of publication of application: **22.02.2023**
(21) Application number: 21788261.2
(22) Date of filing: 09.04.2021
(51) Int. Cl.: H04W 72/04

(54) **RESOURCE MANAGEMENT METHOD AND APPARATUS, SERVER, AND STORAGE MEDIUM**

(30) Priority: 13.04.2020 CN 202010286284
(71) Applicant: ZTE Corporation, Shenzhen, Guangdong 518057 (CN)
(72) Inventor: SHI, Na, Shenzhen, Guangdong 518057 (CN); CAO, Yijin, Shenzhen, Guangdong 518057 (CN); HOU, Jun, Shenzhen, Guangdong 518057 (CN)
(74) Representative: Osterhoff, Utz
(86) International application number: PCT/CN2021/086061
(87) International publication number: WO 2021/208803

(57) **Abstract**

The embodiments of the present application relate to the field of communications, and disclose a resource management method, a resource management device, a server, and a storage medium. In the present application, the method includes: obtaining a service state of each terminal on a 5G side; determining a first target terminal according to the service state, the service state of the first target terminal on the 5G side being an idle state; and releasing bandwidth resources of the first target terminal. The first target terminal in the idle state on the 5G side is accurately obtained through detecting the service state of the terminal on the 5G side. The bandwidth resources on the 5G side is flexibly managed and controlled through selectively releasing the idle bandwidth resources corresponding to the first target terminal.

## Description

### TECHNICAL FIELD

The embodiments of the present application relate to the field of communications, and in particular, to a resource management method, a resource management device, a server, and a storage medium.

### BACKGROUND

Nowadays, the architecture of 5G network is divided into independent deployment SA (Stand-Alone, SA) and non-independent deployment NSA (None Stand-Alone, NSA). Under the NSA architecture, NR (New Radio, NR) can improve network coverage, enhance network capacity, and provide users with a higher-quality service experience on 5G networks. With the increase of NSA users and SA users, the resource occupation on the 5G side is also gradually increasing.

The inventor found that there are at least the following problems in the related art: the management of 5G resources is very rigid, and NSA users will occupy 5G resources meaninglessly, resulting in waste of 5G resources.

### SUMMARY

The purpose of the embodiments of the present application is to provide a resource management method, a resource management device, a server and a storage medium, to flexibly manage and control 5G resources, to avoid the waste of 5G resources caused by the meaningless occupation of terminals, and to reduce the power consumption of terminal equipment.

In order to solve the above technical problem, the embodiments of the present application provide a resource management method, including: obtaining a service state of each terminal on a 5G side; determining a first target terminal according to the service state, the service state of the first target terminal on the 5G side being an idle state; and releasing bandwidth resources of the first target terminal.

The embodiments of the present application further provide a resource management device, including: an acquisition module for obtaining a service state of each terminal on a 5G side; a determination module for determining a first target terminal according to the service state, the service state of the first target terminal on the 5G side being an idle state; and a control module for releasing bandwidth resources of the first target terminal.

The embodiments of the present application further provide a server, including: at least one processor; and a memory communicated with the at least one processor, the memory stores instructions executable by the at least one processor, when the instructions are executed by the at least one processor, the at least one processor executes the resource management method as described above.

The embodiments of the present application further provide a computer-readable storage medium storing a computer program, when the computer program is executed by a processor, the resource management method as described above is implemented.

### BRIEF DESCRIPTION OF THE DRAWINGS

One or more embodiments are exemplified by the pictures in the corresponding drawings, and these exemplified descriptions do not constitute limitations on the embodiments.
FIG. 1 is a flowchart of a resource management method according to a first embodiment of the present application.
FIG. 2 is a sub-flow chart of obtaining a service state according to a second embodiment of the present application.
FIG. 3 is a flowchart of a resource management method according to a third embodiment of the present application.
FIG. 4 is a flowchart of resource reconfiguration according to a third embodiment of the present application.
FIG. 5 is a schematic structural diagram of a resource management device according to a fourth embodiment of the present application.
FIG. 6 is a schematic structural diagram of a server according to a fifth embodiment of the present application.

### DETAILED DESCRIPTION OF THE EMBODIMENTS

In order to make the objectives, technical solutions and advantages of the embodiments of the present application clearer, each embodiment of the present application will be described in detail below with reference to the accompanying drawings. However, those of ordinary skill in the art can understand that, in each embodiment of the present application, many technical details are provided for the reader to better understand the present application. However, even without these technical details and various changes and modifications based on the following embodiments, the technical solutions claimed in the present application can be realized. The following divisions of the various embodiments are for the convenience of description, and should not constitute any limitation on the specific implementation of the present application, and the various embodiments may be combined with each other and referred to each other on the premise of not contradicting each other.

A first embodiment of the present application relates to a resource management method, including: obtaining a service state of each terminal on a 5G side; determining a first target terminal according to the service state, the service state of the first target terminal on the 5G side being an idle state; and releasing bandwidth resources of the first target terminal. The first target terminal in the idle state on the 5G side is accurately obtained through detecting the service state of the terminal on the 5G side, and the idle bandwidth resources are then accurately determined. The bandwidth resources on the 5G side are flexibly managed and controlled through selectively releasing the idle bandwidth resources corresponding to the first target terminal, which avoids the meaningless occupation of bandwidth resources when the service state of the terminal on the 5G side is idle, thereby avoiding the waste of 5G bandwidth resources and reducing the power consumption of terminal equipment due to the need to maintain real-time smooth 5G connections.

The implementation details of the resource management method of the present embodiment will be specifically described below. The following contents are only provided for the convenience of understanding, and are not necessary for implementing this solution.

The resource management method in this embodiment can flexibly manage and control the resources in the network. The resource management method in this embodiment is not limited to being applied to the NSA architecture, but can also be applied to an independently deployed architecture. In any architecture that needs to perform resource management and control, resource management can be performed according to the method of this embodiment. This embodiment is applied in the NSA architecture to illustrate the resource management of the access terminal device on the 5G side as an example. The terminal is registered on the 4G network in advance, and the NR side is added as a secondary node. When a single bearer is established on the terminal and there is service data, the 4G and 5G networks can be used at the same time.

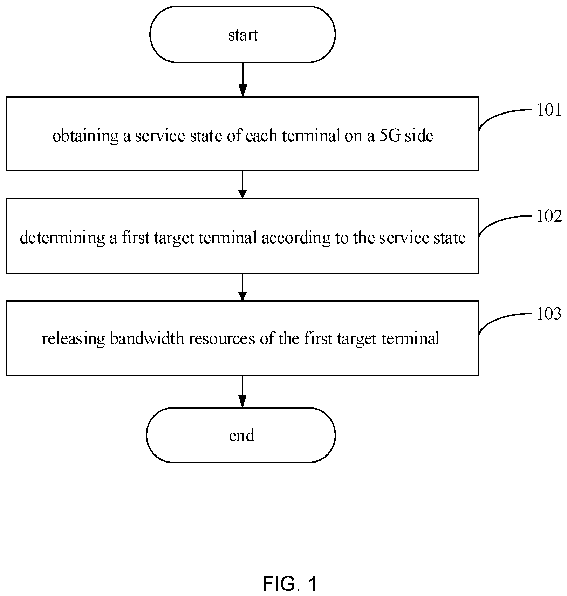

The specific flow of the resource management method in this embodiment is shown in FIG. 1, and the resource management method includes the following operations.

Operation 101, obtaining a service state of each terminal on a 5G side.

After the base station configures the bandwidth resources for the accessed user equipment, it detects the service data transmission state of each accessed terminal on the 5G side, and obtains the service state of each terminal on the 5G side.

For example, the base station detects whether the connected user equipment has uplink or downlink service data on the 5G side, whether there is signaling transmission on the control plane, etc. If the terminal has no service data and signaling transmission on the 5G side, it is determined that the service state of the terminal on the 5G side is the idle state. If the terminal has uplink and downlink data or signaling transmission on the 5G side, it is determined that the service state of the terminal on the 5G side is the non-idle state.

Operation 102, determining a first target terminal according to the service state.

After the base station obtains the service state of each user equipment accessed on the 5G side, it determines the first target terminal according to the service state. The service state of the first target terminal on the 5G side is an idle state.

Operation 103, releasing bandwidth resources of the first target terminal.

After determining the first target terminal according to the service state of the accessed user equipment on the 5G side, the base station takes the bandwidth resources of each first target terminal as idle resources to be released, and releases the bandwidth resources of the first target terminal.

Thus, this embodiment provides a resource management method. The base station determines the first target terminal whose service state is idle on the 5G side by detecting the service state of the accessed user equipment on the 5G side, and releases the bandwidth resources corresponding to the first target terminal. By detecting the service state of the accessing terminal on the 5G side, it can accurately determine the terminal that is idle on the 5G side, and then determine the bandwidth resources currently in the idle state. By releasing the bandwidth resources of the first target terminal, meaningless occupation of the bandwidth resources on the 5G side by the terminal is avoided, thereby avoiding the waste of resources on the 5G side, and avoiding the power consumption caused by the terminal needing to keep the 5G transmission smooth in real time.

A second embodiment of the present application relates to a resource management method. The second embodiment is substantially the same as the first embodiment. In this embodiment, when the base station detects the service state of the terminal on the 5G side, it respectively detects the user plane service state and control plane service state of the terminal on the 5G side, and more accurately determines the service state of the terminal on the 5G side. When the resources are released, according to the specific idle state of the terminal on the 5G side, the resources of the terminal are selectively released to ensure that normal services are not affected while releasing as much bandwidth resources as possible.

The resource management process in this embodiment is similar to the resource management process in the first embodiment, and the specific flowchart can refer to the flowchart of the resource management method in the first embodiment.

Operation 101, obtaining a service state of each terminal on a 5G side.

After the base station configures bandwidth resources for each accessed user equipment, it detects the service data transmission state of each accessed terminal on the 5G side, and obtains the service state of each terminal on the 5G side.

In an example, when obtaining the service state of each terminal device on the 5G side, the base station detects the user plane service state and control plane service state of each terminal on the 5G side. If there is no service data on the user plane of the terminal on the 5G side, it is determined that the service state of the terminal on the 5G side includes the user plane idle state. If there is no signaling data on the control plane of the terminal on the 5G side and no service data on the user plane of the terminal on the 5G side, it is determined that the service state of the terminal on the 5G side includes the control plane idle state.

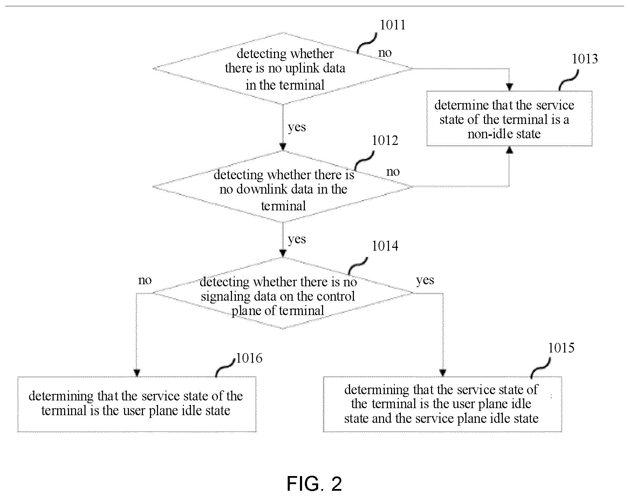

For example, when the base station needs to detect the service state of the user equipment (UE) on the 5G side, the sub-flow chart for determining the service state of the terminal is shown in FIG. 2 and includes the following operations.

Sub-operation 1011, detecting whether there is no uplink data in the terminal. If there is no uplink data, the process goes to sub-operation 1012, and if there is uplink data, the process goes to sub-operation 1013.

When the base station detects the user plane service state of the terminal on the 5G side, it detects whether there is no uplink transmission service data on the user plane of the terminal. If the detection result is that there is no uplink service data on the user plane of the terminal on the 5G side, then the process goes to sub-operation 1012 to further detect the service state of the terminal. If the detection result is that the terminal has uplink service data on the user plane of the 5G side, the process goes to sub-operation 1013, to determine that the service state of the terminal is a non-idle state, and then perform real-time detection of the service state of the terminal again.

Sub-operation 1012, detecting whether there is no downlink data in the terminal. If there is no downlink data, the process goes to sub-operation 1014. If there is uplink data, the process goes to sub-operation 1013.

When the base station further detects the user plane service state of the terminal on the 5G side, it detects whether there is no downlink transmission service data on the user plane of the terminal. If the detection result is that there is no downlink service data on the user plane of the terminal on the 5G side, the process goes to sub-operation 1014 to further detect the service state of the terminal. If the detection result is that the terminal has downlink service data on the user plane of the 5G side, the process goes to sub-operation 1013, to determine that the service state of the terminal is a non-idle state, and then perform real-time detection of the service state of the terminal again.

Sub-operation 1014, detecting whether there is no signaling data on the control plane of the terminal. If there is no signaling data, the process goes to sub-operation 1015, and if there is signaling data, the process goes to sub-operation 1016.

When the base station detects the service state of the terminal on the control plane on the 5G side, it detects whether there is no signaling data on the control plane of the terminal. If the detection result is that the terminal has no signaling data on the control plane on the 5G side, the process goes to sub-operation 1015, to determine that the service state of the terminal is the user plane idle state and the service plane idle state. If the detection result is that the terminal has signaling data on the control plane on the 5G side, the process goes to operation 1016, to determine that the service state of the terminal is the user plane idle state.

According to the detection result of the service state detection process, the service state of each terminal on the 5G side is determined.

During the detection process, according to the above method, the base station can preferentially detect whether there is uplink or downlink service data on the user plane of the terminal on the 5G side. If there is uplink or downlink service data on the user plane, the user plane of the terminal on the 5G side is in a non-idle state, and there is no need to detect the service state of the control plane, and it is determined that the service state of the terminal on the 5G side is a non-idle state. If there is no uplink and downlink service data on the user plane of the terminal on the 5G side, the user plane of the terminal on the 5G side is in an idle state. Further, it is detected whether there is signaling data on the control plane of the terminal on the 5G side, the service state of the terminal on the control plane is determined, and the service state of the terminal on the 5G side is further determined.

The base station can also preferentially detect whether there is signaling transmission on the control plane of the terminal on the 5G side. If there is no signaling transmission on the control plane of the terminal on the 5G side, it is necessary to continue to detect whether the user plane of the terminal on the 5G side is idle. If there is no service data transmission on the user plane of the terminal on the 5G side, it is determined that the control plane of the terminal on the 5G side is in an idle state. If the control plane of the terminal on the 5G side is in a non-idle state, it is possible to further detect whether there is uplink or downlink service data on the user plane of the terminal on the 5G side, to determine the user plane service state of the terminal, and then determine the service state of the terminal on the 5G side.

Besides, the base station can also directly synchronously detect whether there is service data on the user plane of the terminal on the 5G side and whether there is signaling data on the control plane of the terminal on the 5G side, directly determine the user plane service state and control plane service state of the terminal on the 5G side, and then determine the service state of the terminal on the 5G side.

It is worth mentioning that, when determining the service state of the terminal on the 5G side, a detection method for determining the service state of the terminal may be selected according to the actual situation or needs, and the specific method for obtaining the service state is not limited in this embodiment.

Operation 102, determining a first target terminal according to the service state.

After the base station obtains the service state of each accessed user equipment on the 5G side, it determines the first target terminal according to the service state. The service state of the first target terminal on the 5G side is an idle state.

In an embodiment, when the base station determines the first target terminal, the service state of the first target terminal includes a user plane idle state.

For example, there are three user equipment A, B, and C that access the base station. The service state of terminal A on the 5G side is a non-idle state. The service state of terminal B on the 5G side is the user plane idle state. The service state of terminal C on the 5G side is the user plane idle state and the control plane idle state. Then, both terminal B and terminal C are used as the first target terminal. By using all terminals including the user plane idle state as the first target terminal and releasing the user plane bandwidth resources of the first target terminal, it is ensured that as many idle bandwidth resources as possible can be released.

Operation 103, releasing bandwidth resources of the first target terminal.

After determining the first target terminal according to the service state of the accessed user equipment on the 5G side, the base station releases the bandwidth resources corresponding to the first target terminal.

In an embodiment, when the base station releases the bandwidth resources of the first target terminal, if the service state of the first target terminal on the 5G side only includes the user plane idle state, the user plane bandwidth resources of the first target terminal on the 5G side are released; if the service state of the first target terminal on the 5G side also includes a control plane idle state, the user plane bandwidth resources and the control plane bandwidth resources of the first target terminal on the 5G side are released. Releasing the user plane bandwidth resources and the control plane bandwidth resources for the first target terminal in the user plane idle state and the control plane idle state ensures that as much bandwidth resources as possible can be released without affecting normal services, thereby further avoiding the waste of bandwidth resources.

For example, when the base station detects that the service state of the first target terminal A includes a user plane idle state and a control plane idle state, the base station will release the user plane bandwidth resources and control plane bandwidth resources corresponding to the first target terminal A. When the base station detects that the service state of the first target terminal B only includes the user plane idle state, the base station will release the user plane bandwidth resources corresponding to the first target terminal B.

Thus, this embodiment provides a resource management method. The first target terminal is accurately determined through detecting the service state of the user plane and control plane of the terminal on the 5G side. By selectively releasing the idle bandwidth resources corresponding to the first target terminal according to the specific idle state of the first target terminal, it is ensured that as many idle bandwidth resources are released as possible, while avoiding any impact on normal services.

A third embodiment of the present application relates to a resource management method. This embodiment is similar to the second embodiment. In this embodiment, after releasing the bandwidth resources corresponding to the first target terminal, continue to detect the service state of the first target terminal on the 5G side. When the service state of the terminal on the 5G side changes to a non-idle state, bandwidth resources are reconfigured for the terminal to ensure that normal services are not affected on the basis of avoiding unnecessary occupation of bandwidth resources.

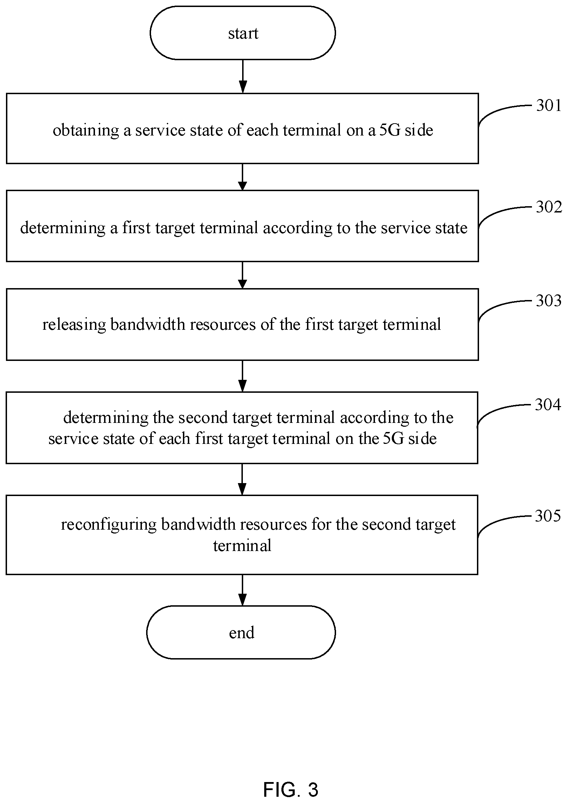

The flowchart of the resource management method in this embodiment is shown in FIG. 3, and the resource management method includes the following operations.
Operation 301, obtaining a service state of each terminal on a 5G side;
Operation 302, determining a first target terminal according to the service state, wherein the service state of the first target terminal on the 5G side is an idle state; and
Operation 303, releasing bandwidth resources of the first target terminal.

Operations 301, 302, and 303 in this embodiment are similar to operations 201, 202, and 203 in the second embodiment, and will not be repeated here.

Operation 304, determining the second target terminal according to the service state of each first target terminal on the 5G side.

After releasing the bandwidth resources of the first target terminal, the base station detects the service state of each first target terminal on the 5G side, obtains the service state of each first target terminal on the 5G side, and determines the second target terminal according to the service state of each first target terminal on the 5G side. The second target terminal is the first target terminal whose service state is changed to a non-idle state on the 5G side.

In an embodiment, after the base station completes the resource release, it detects the service state of each first target terminal on the 5G side. The base station can preferentially detect whether there is signaling transmission or service notification on the control plane of the first target terminal on the 5G side. If the first target terminal does not transmit signaling data on the control plane on the 5G side, it is determined that the control plane of the first target terminal on the 5G side is in an idle state, and it is necessary to continue to detect whether the user plane of the first target terminal on the 5G side is idle. If there is no uplink and downlink service data on the user plane of the first target terminal on the 5G side, the service state of the first target terminal on the 5G side is still the control plane idle state and the user plane idle state. If the control plane of the first target terminal on the 5G side is in a non-idle state, it is necessary to detect whether there is uplink or downlink service data on the user plane of the first target terminal on the 5G side. If there is no uplink and downlink service data on the user plane of the first target terminal, it is determined that the user plane of the first target terminal on the 5G side is in an idle state, the service state of the first target terminal on the 5G side is that the control plane is not idle, and the user plane is idle. If there is uplink or downlink service data on the user plane, it is determined that the user plane of the first target terminal on the 5G side is also in a non-idle state, and the service state of the first target terminal on the 5G side is a non-idle state.

During the detection process, the base station can also preferentially detect the user plane service state of the first target terminal on the 5G side. If the user plane of the first target terminal on the 5G side is in a non-idle state, there is no need to detect the service state of the control plane, and the service state of the first target terminal on the 5G side is a non-idle state. If the user plane service state of the first target terminal on the 5G side is idle, the control plane service state of the first target terminal on the 5G side is detected, so as to accurately determine the service state of the terminal on the 5G side.

Besides, when obtaining the service state of the first target terminal on the 5G side, the user plane service state and the control plane service state can also be detected synchronously. The method used in obtaining the terminal service state can be selected according to actual needs, and the method for determining the terminal service state is not limited in this embodiment.

After obtaining the service state of each terminal, each first target terminal whose service state is changed from an idle state to a non-idle state is used as a second target terminal.

Operation 305, reconfiguring bandwidth resources for the second target terminal.

After determining the second target terminal according to the service state of the first target terminal on the 5G side, the base station reconfigures bandwidth resources for the second target terminal.

In an embodiment, after determining the first target terminal, the base station stores the terminal configuration information of the first target terminal. When performing resource reconfiguration, the pre-stored terminal configuration information of the second target terminal is queried, and bandwidth resources are reconfigured for the second target terminal according to the terminal configuration information. By pre-storing the terminal configuration information of the first target terminal that releases the bandwidth resources, when reconfiguring the bandwidth resources for the terminal, it is possible to directly read the stored terminal configuration information to reconfigure the bandwidth resources for the terminal, thereby avoiding the need to re-acquire configuration information from the terminal, which not only greatly improves the efficiency of resource configuration, but also avoids the impact on service data transmission as much as possible, and prevents the terminal from sensing the release and reconfiguration of resources.

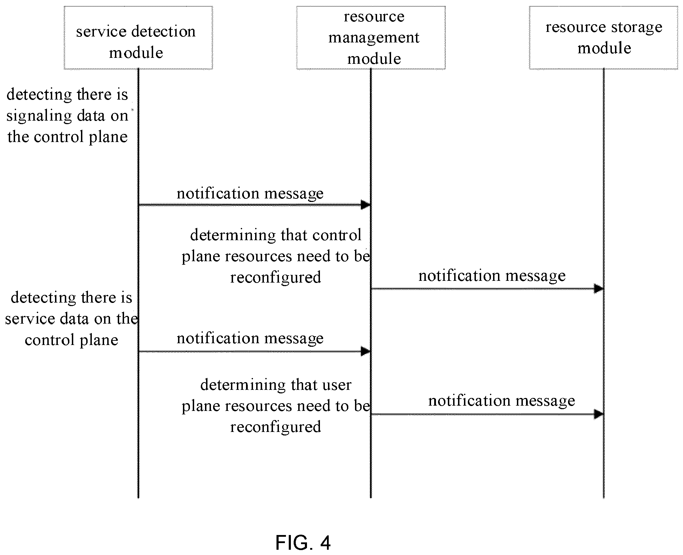

For example, FIG. 4 shows a schematic flowchart of the base station reconfiguring bandwidth resources for the second target terminal according to the stored configuration information under the NSA architecture. When the service detection module in the base station detects that the terminal has signaling transmission or receives a service notification on the control plane, it sends a notification message carrying an indication of reconfiguring bandwidth resources for the control plane to the resource management module. After receiving the message, the resource management module determines that the control plane bandwidth resources need to be reconfigured for the terminal. The resource management module sends a notification message carrying the terminal configuration information of the released terminal to the resource storage module, obtains the configuration information of the terminal, and then reconfigures the control plane bandwidth resources for the terminal.

When the service detection module detects that the terminal has uplink service data or downlink service data transmission or service notification on the user plane, it sends a notification message to the resource management module. The resource management module obtains the configuration information of the terminal, and reconfigures the control plane bandwidth resources and the user plane bandwidth resources for the terminal.

It is worth mentioning that the bandwidth resources released by the second target terminal may be user plane bandwidth resources or user plane and control plane bandwidth resources. When the released bandwidth resources of the second target terminal are only user plane bandwidth resources, when the user plane of the second target terminal is changed to a non-idle state, the user plane bandwidth resources can be directly reconfigured for the second target terminal. When all bandwidth resources of the second target terminal are released, when the control plane of the second target terminal is changed to a non-idle state and the user plane of the second target terminal is still in an idle state, only the control plane bandwidth resources may be reconfigured for the second target terminal.

In addition, when performing resource reconfiguration, the terminal configuration information may also be re-acquired from the second target terminal to perform resource reconfiguration for the second target terminal. During the specific implementation, the acquisition method and reconfiguration strategy of the terminal configuration information when reconfiguring the bandwidth resources can be selected according to the actual situation or needs. This embodiment does not limit the acquisition of configuration information and the reconfiguration policy.

Thus, this embodiment provides a resource management method. After selectively releasing the bandwidth resources of the first target terminal according to the specific idle state of the first target terminal, the service state of the first target terminal on the 5G side is detected, and bandwidth resources for the second target terminal whose service state is changed to a non-idle state are reconfigured according to the specific service state. Therefore, while avoiding the waste of bandwidth resources, it ensures that the normal services of the terminal on the 5G side are not affected as much as possible.

The operations of the above various methods are divided only for the purpose of describing clearly. During implementation, the operations can be combined into one operation or some operations can be split and decomposed into multiple operations. As long as the same logical relationship is included, they are all within the protection scope of the present application. Adding insignificant modifications to the algorithm or process or introducing insignificant designs without changing the core design of the algorithm and process are within the protection scope of the present application.

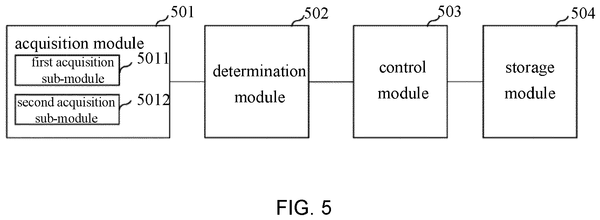

A fourth embodiment of the present application relates to a resource management device. As shown in FIG. 5, the resource management device includes an acquisition module 501, a determination module 502, and a control module 503.

The acquisition module 501 is for obtaining a service state of each terminal on a 5G side.

The determination module 502 is for determining a first target terminal according to the service state, and the service state of the first target terminal on the 5G side is an idle state.

The control module 503 is for releasing bandwidth resources of the first target terminal.

In an embodiment, the service state of the first target terminal includes a user plane idle state, and the control module 503 is for releasing user plane bandwidth resources of the first target terminal.

In another embodiment, the control module 504 is for releasing the user plane bandwidth resources and control plane bandwidth resources of the first target terminal on the 5G side in response to the service state of the first target terminal on the 5G side further including a control plane idle state.

In another embodiment, the acquisition module 501 includes a first acquisition sub-module 5011 and a second acquisition sub-module 5012. The first acquisition sub-module 5011 is for obtaining a user plane service state of each terminal on the 5G side, in response that there is no service data on the user plane of the terminal on the 5G side, determining that the service state of the terminal on the 5G side includes a user plane idle state. The second acquisition sub-module 5012 is for obtaining a control plane service state of each terminal on the 5G side; in response that there is no signaling data on the control plane of the terminal on the 5G side and no service data on the user plane of the terminal on the 5G side, determining that the service state of the terminal on the 5G side includes a control plane idle state.

For example, the first acquisition sub-module 5011 is for detecting whether there is uplink service data, downlink service data and service notifications on the user plane of the terminal on the 5G side; if it is not detected that there is data transmission such as service data and service notification on the user plane of the terminal for a period of time, determining that the user plane service state of the terminal on the 5G side is the idle state. The second acquisition sub-module 5012 is for detecting whether there is signaling data or service notification on the control plane of the terminal on the 5G side; if it is not detected that there is signaling data transmission on the control plane of the terminal and there is no service data transmission on the user plane of the terminal for a period of time, determining that the service state of the terminal on the control plane on the 5G side is an idle state.

It is worth mentioning that if the priority is to detect the service state of the control plane, when the service state of the control plane is in the idle state, it is necessary to detect the service state of the user plane. If the service state of the user plane is in the idle state, it is determined that the service state of the terminal is the idle state of the control plane and the idle state of the user plane. If the priority is to detect the service state of the user plane, when the service state of the user plane is in the non-idle state, it is determined that the service state of the terminal is in the non-idle state, and it is not necessary to detect the service state of the control plane. When the service state of the user plane is in the idle state, the service state of the control plane needs to be detected again, so as to accurately obtain the service state of each terminal on the 5G side.

Besides, when obtaining the service state of the terminal, the first acquisition sub-module 5011 and the second acquisition sub-module 5012 can also directly and synchronously obtain the user plane service state and the control plane service state. In practical applications, a specific method for obtaining the service state may be selected as required, and this embodiment does not limit the specific method for obtaining the service state.

In another embodiment, the acquisition module 501 is further for obtaining the service state of each first target terminal on the 5G side. The determination module 502 is further for determining the second target terminal according to the service state of each first target terminal on the 5G side. The second target terminal is the first target terminal whose service state is changed to a non-idle state on the 5G side. The control module 503 is further for reconfiguring bandwidth resources for the second target terminal.

In another embodiment, the resource management device further includes a storage module 504 for storing terminal configuration information of the first target terminal after the determination module determines the first target terminal. The control module 503 is further for querying pre-stored terminal configuration information of the second target terminal, and reconfiguring the bandwidth resources for the second target terminal according to the terminal configuration information.

It is not difficult to find that this embodiment is a device embodiment corresponding to the method embodiment, and this embodiment can be implemented in cooperation with the method embodiment. The related technical details mentioned in the method embodiment are still valid in this embodiment, and are not repeated here in order to reduce repetition. Correspondingly, the relevant technical details mentioned in this embodiment can also be applied to the method embodiments.

It is worth mentioning that each module involved in this embodiment is a logic module. In practical applications, a logical unit may be a physical unit, a part of a physical unit, or a combination of multiple physical units. In addition, in order to highlight the innovative part of the present application, this embodiment does not introduce units that are not closely related to solving the technical problem raised by the present application, but this does not mean that there are no other units in this embodiment.

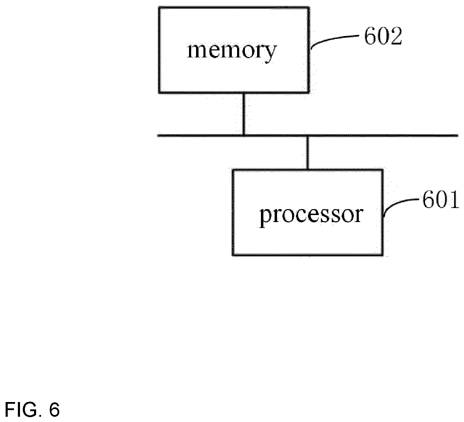

A fifth embodiment of the present application relates to a server. As shown in FIG. 6, the server includes at least one processor 601 and a memory 602 communicated with the at least one processor 601. The memory 602 stores instructions executable by the at least one processor 601, when the instructions are executed by the at least one processor 601, the at least one processor 601 can perform the resource management method as described above.

The memory and the processor are connected by a bus. The bus may include any number of interconnected buses and bridges that connect together the various circuits of one or more processors and memory. The bus may also connect together various other circuits, such as peripherals, voltage regulators, and power management circuits, which are well known in the art and therefore will not be described further herein. The bus interface provides the interface between the bus and the transceiver. A transceiver may be a single element or multiple elements, such as multiple receivers and transmitters, providing a means for communicating with various other devices over a transmission medium. The data processed by the processor is transmitted on the wireless medium through the antenna. In this embodiment, the antenna also receives the data and transmits the data to the processor.

The processor is responsible for managing the bus and general processing, and may also provide various functions including timing, peripheral interface, voltage regulation, power management, and other control functions. The memory may store data used by the processor when performing operations.

A sixth embodiment of the present application relates to a computer-readable storage medium storing a computer program. The above method embodiments are implemented when the computer program is executed by the processor.

That is, those skilled in the art can understand that all or part of the operations in the method of the above embodiments can be completed by instructing the relevant hardware through a program. The program is stored in a storage medium, and includes several instructions to cause a device (which may be a single-chip microcomputer, a chip, etc.) or a processor to execute all or part of the operations of the methods described in the various embodiments of the present application. The aforementioned storage medium includes: U disk, removable hard disk, read-only memory (ROM), random access memory (RAM), magnetic disk or optical disk and other media that can store program codes.

Those of ordinary skill in the art can understand that the above-mentioned embodiments are specific embodiments for realizing the present application.

However, in practical application, various changes in form and details may be made therein without departing from the spirit and scope of the present application.

## Claims

1. A resource management method, **characterized by** comprising:
obtaining a service state of each terminal on a 5G side;
determining a first target terminal according to the service state, wherein the service state of the first target terminal on the 5G side is an idle state; and
releasing bandwidth resources of the first target terminal.

2. The resource management method according to claim 1, wherein the service state of the first target terminal comprises a user plane idle state, and releasing the bandwidth resources of the first target terminal comprises:
releasing user plane bandwidth resources of the first target terminal.

3. The resource management method according to claim 2, wherein releasing the bandwidth resources of the first target terminal further comprises:
releasing the user plane bandwidth resources and control plane bandwidth resources of the first target terminal on the 5G side in response to the service state of the first target terminal on the 5G side further comprising a control plane idle state.

4. The resource management method according to claim 1, wherein obtaining the service state of each terminal on the 5G side comprises:
detecting a user plane service state and a control plane service state of each terminal on the 5G side;
in response that there is no service data on the user plane of the terminal on the 5G side, determining that the service state of the terminal on the 5G side comprises a user plane idle state; and
in response that there is no signaling data on the control plane of the terminal on the 5G side and no service data on the user plane of the terminal on the 5G side, determining that the service state of the terminal on the 5G side comprises a control plane idle state.

5. The resource management method according to any one of claims 1 to 4, wherein after releasing the bandwidth resources of the first target terminal, the resource management method further comprises:
obtaining a service state of each first target terminal on the 5G side;
determining a second target terminal according to the service state of each first target terminal on the 5G side, wherein the service state of the second target terminal is changed from an idle state to to a non-idle state on the 5G side; and
reconfiguring bandwidth resources for the second target terminal.

6. The resource management method according to claim 5, wherein after determining the first target terminal, the resource management method further comprises:
storing terminal configuration information of the first target terminal;
reconfiguring the bandwidth resources for the second target terminal comprises:
querying pre-stored terminal configuration information of the second target terminal, and reconfiguring the bandwidth resources for the second target terminal according to the terminal configuration information.

7. A resource management device, applied to the resource management method according to any one of claims 1 to 6, **characterized in that**, the resource management device comprises:
an acquisition module for obtaining a service state of each terminal on a 5G side;
a determination module for determining a first target terminal according to the service state, wherein the service state of the first target terminal on the 5G side is an idle state; and
a control module for releasing bandwidth resources of the first target terminal.

8. A server, **characterized by** comprising:
at least one processor; and
a memory communicated with the at least one processor,
wherein the memory stores instructions executable by the at least one processor, when the instructions are executed by the at least one processor, the at least one processor executes the resource management method according to any one of claims 1 to 6.

9. A computer-readable storage medium storing a computer program, **characterized in that**, when the computer program is executed by a processor, the resource management method according to any one of claims 1 to 6 is implemented.
